# EUROPÄISCHE PATENTANMELDUNG

(11) **EP 0 924 390 A2**
(43) Veröffentlichungstag der Anmeldung: **23.06.1999**
(21) Anmeldenummer: 98123965.0
(22) Anmeldetag: 16.12.1998
(51) Int. Cl.: F01K 21/04, F01K 23/10

(54) **Kraftwerksanlage**

(30) Priorität: 18.12.1997 DE 19756329
(71) Anmelder: GAS-, ELEKTRIZITÄTS- UND WASSERWERKE KÖLN AG., D-50823 Köln (DE)
(72) Erfinder: Saurer, Kurt, Dipl.-Ing., 51427 Bergisch Gladbach (DE); Winkler, Wolfgang, Prof. Dr., 21423 Winsen (Luhe) (DE)
(74) Vertreter: Nau, Walter, Dipl.-Ing.

(57) **Zusammenfassung**

Die Erfindung betrifft eine Kraftwerksanlage mit Gas-, Dampf- und Gas-Dampf-Mischturbinen.

Durch entsprechende Vernetzung der drei Turbinenanlagen wird unter optimaler Nutzung der Abwärme eine Annäherung an die isotherme Wärmezu- und -abfuhr erreicht. Die Erfindung ist für Kraftwerke geeignet.

## Beschreibung

Die Erfindung betrifft eine Kraftwerksanlage, mit einer ersten Gasturbogruppe und einem dieser nachgeordneten ersten Abhitzekessel, der in Strömungsverbindung mit einer Kondensationsdampfturbine steht.

In der EP-A- 0 439 754 ist eine Kraftwerksanlage beschrieben, die eine Gasturbogruppe mit Abhitzekessel und Dampfturbine (GuD = Gas- und Dampfturbinenprozeß) aufweist. Diese Prozesse erreichen heute elektrische Wirkungsgrade von bis zu 58 %.

Ein in der EP-B- 0 650 554 beschriebenes Verfahren zum Betreiben einer Gasturbine gestattet auch einen Gas-Dampf-Mischturbinenprozess, bei dem der eingedüste Dampf zur Kühlung der Brennkammer Verwendung findet. Dadurch wird die Verbrennungsluft nicht mehr wie bei herkömmlichen Gasturbinen zur Kühlung der Brennkammer benötigt, sondern nur zur Steuerung des Verbrennungsprozesses. Deshalb kann die Verdichterleistung im Verhältnis zur Turbinenleistung bei derartigen Gas-Dampf-Mischturbinen deutlich kleiner als bei herkömmlichen Gasturbinen sein.

Eine weitere Verbesserung der Wärmeausnutzung läßt sich bei diesem Prozeß dadurch erreichen, daß die Abwärme der Gas-Dampf-Mischturbine auch teilweise zu einer Zwischenerhitzung des der Brennkammer zugeführten Abdampfes der Dampfanlage genutzt wird.

Bei den beschriebenen Prozessen wirkt sich für die Annäherung an den isothermen Verbrennungskraftprozeß nachteilig aus, daß sich das Druckniveau mit der Temperatur bei der Entspannung des Arbeitsmittels verringert und so die Annäherung praktisch nur mit wenigen Stufen möglich ist. Es bleiben aber dadurch wesentliche Elemente des adiabaten Verbrennungskraftprozesses erhalten.

Der Erfindung liegt die Aufgabe zugrunde, einen Verbrennungskraftprozeß so zu gestalten, daß dessen Annäherung an einen isothermen Verlauf in mehreren Stufen möglich ist.

Die Aufgabe wird dadurch gelöst, daß der vorgeschaltete Gas- und Dampfturbinenprozeß als Dampfquelle für einen Gas- Dampf-Mischturbinenprozeß dient, dem ein Dampfturbinenprozeß nachgeschaltet ist. Auf diese Weise läßt sich die Wärmezufuhr zum Gesamtprozeß durch die erneute Zwischenerhitzung des Abdampfes aus dem vorgeschalten Gas- und Dampfturbinenprozeß besser an eine isotherme Wärmezufuhr annähern als bei einem Gas- und Dampfturbinenprozeß allein, wodurch die thermodynamische Mitteltemperatur des tatsächlichen Prozesses der Wärmezufuhr deutlich erhöht wird. Die ebenfalls wichtige isotherme Wärmeabfuhr geschieht mit Hilfe eines nachgeschalteten Dampfprozesses im Kondensationsbetrieb, der die Abwärmeströme der Gas- Dampf-Mischturbine ausnutzt.

Die Verwendung von Economizern zur Speisewasservorwärmung dient ebenfalls zur Carnotisierung der Dampf- bzw. Gas-Dampf-Mischturbinenprozesse. Ein Verkämmen der Economizer erhöht deren Effizienz.

Durch unterschiedliche Eintrittsstellen in die Kondensationsdampfturbine für die unterschiedlichen Drücke verschiedener Dampfströme wird der konstruktive Aufwand für die Endwärmeverwertung minimiert.

Durch eine Zwischenerhitzung des Arbeitsmittels in einer Gasturbogruppe mit Hoch- und Niederdruckteil wird eine Annäherung an die isotherme Wärmezufuhr erreicht, die in Verbindung mit der Abgaswärmenutzung eine Verbesserung des thermischen Wirkungsgrads bewirkt. Dasselbe gilt für die hintereinander geschalteten Gas-Dampf-Mischturbogruppen mit Zwischenerhitzung. Deren Abwärme wird in einem zweiten Abhitzekessel zur Erzeugung von Hochdruckdampf genutzt, der in einer Gegendruckturbine wirkungsgradsteigernd verarbeitet wird.

Durch Anordnung einer dritten Gas-Dampf-Mischturbogruppe wird die Abwärme der ersten und zweiten Gas-Dampf-Mischturbogruppen verwertet und weitere Wärme für die Kondensationsdampfturbine bereitgestellt. Diese verarbeitet die Restwärme aller drei Abhitzekessel in Gestalt von Dampfströmen unterschiedlichen Druckniveaus. Auch durch diese Maßnahmen wird der thermische Wirkungsgrad erhöht. Der Bauaufwand für die erfindungsgemäße Kraftwerksanlage wird dadurch verringert, daß ein Niederdruckverdichter der zweiten Gas-Dampf- Mischturbogruppe als erste Stufe eines Hochdruckverdichters der ersten Gas- Dampf- Mischturbogruppe angeordnet ist.

Weitere Prozeßstufen lassen sich realisieren, die in Art eines Reißverschlußsystems angeordnet sind, wobei den Abschluß der Kette die Gas-Dampf- Mischturbogruppe mit nachgeschaltetem Abhitzesystem und Kondensationsdampfturbine bildet.

Weitere Merkmale der Erfindung ergeben sich aus den weiteren Ansprüchen, der folgenden Beschreibung und der Zeichnung, in der Ausführungsbeispiele der Erfindung schematisch dargestellt sind. Es zeigen:
- Figur 1:: das Schema einer Kraftwerksanlage mit einer Gasturbogruppe und einer Gas-Dampf-Mischturbogruppe,
- Figur 2:: das Schema einer Kraftwerksanlage mit einer Gasturbogruppe und zwei Gas-Dampf-Mischturbogruppen.

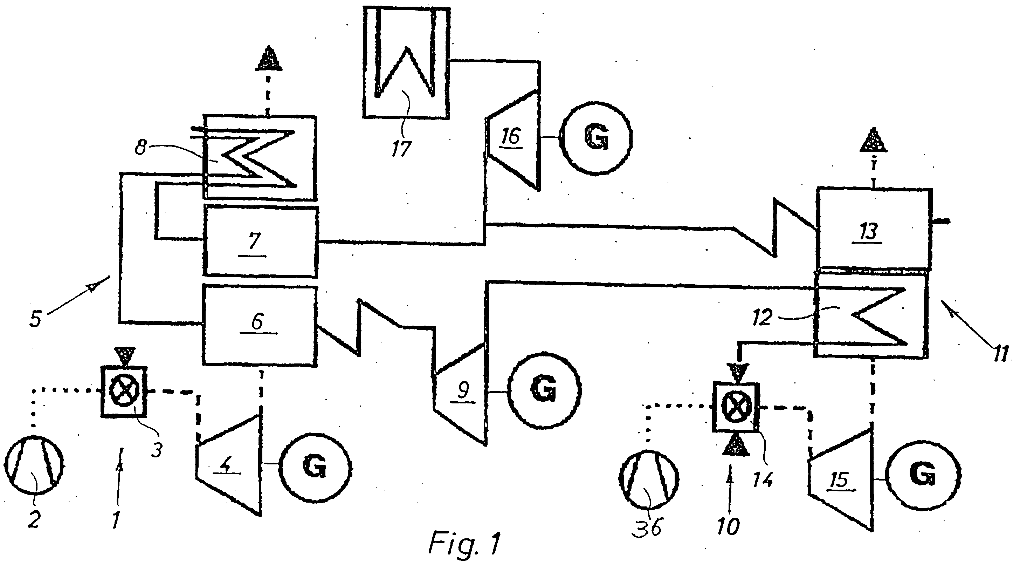

Die Kraftwerksanlage der Figur 1 zeigt eine erste Gasturbogruppe 1, mit einem Verdichter 2, einer Brennkammer 3 und einer Gasturbine 4. Die erste Gasturbogruppe 1 kann auch abweichend von Figur 1 zweistufig mit Zwischenerhitzung ausgebildet werden, um die isotherme Wärmezufuhr anzunähern.

Der ersten Gasturbogruppe 1 ist ein erster Abhitzekessel 5 nachgeschaltet, der einen Hochdruckteil 6 und einen Mitteldruckteil 7, der auch mit einem nicht dargestellten Überhitzer ausgestattet sein kann, sowie einen Eco-Bereich 8 aufweist. In letzterem befinden sich die rauchgasbeheizten Speisewasservorwärmung des Hochdruckteils 6 und des Mitteldruckteils 7, vorzugsweise in verkämmter Anordnung.

Der im Hochdruckteil 6 erzeugte Dampf wird in der ersten Gegendruckturbine 9 bis auf einen Gegendruck, der etwas oberhalb des Brennkammerdrucks einer ersten Gas-Dampf-Mischturbogruppe 10 liegt, entspannt.

Der ersten Gas-Dampf-Mischturbogruppe 10 ist ein zweiter Abhitzekessel 11 nachgeordnet, der als Heizflächen einen Überhitzer 12 und einen Mitteldruckteil 13 enthält. Der Abdampf der ersten Gegendruckturbine 9 wird über den Überhitzer 12 zu einer Brennkammer 14 der ersten Gas-Dampf-Mischturbogruppe 10 geleitet. Dort mischt er sich mit den Brenngasen, kühlt die Brennkammer 14 und wird in einer ersten Gas-Dampf-Mischturbine 15 auf einen Druck leicht über Umgebungsdruck entspannt, um die Strömungsverluste im zweiten Abhitzekessel 11 ausgleichen zu können.

Der im Mitteldruckteil 7 des ersten Abhitzekessels 5 erzeugte Dampf wird mit dem im Mitteldruckteil 13 des zweiten Abhitzekessels 11 erzeugten Dampf in einer Kondensationsdampfturbine 16 entspannt und in einem Kondensator 17 niedergeschlagen. Dabei kann, wenn dies zu einer besseren Wärmeausnutzung führt, der Druck der Mitteldruckteile 7, 13 auch unterschiedlich sein. In diesem Falle würde, anders als in Figur 1 dargestellt, der höher gespannte Dampf in den Eintritt, der niedriger gespannte Dampf zu einem Punkt entsprechenden Drucks in die Kondensationsdampfturbine 16 eingeführt werden.

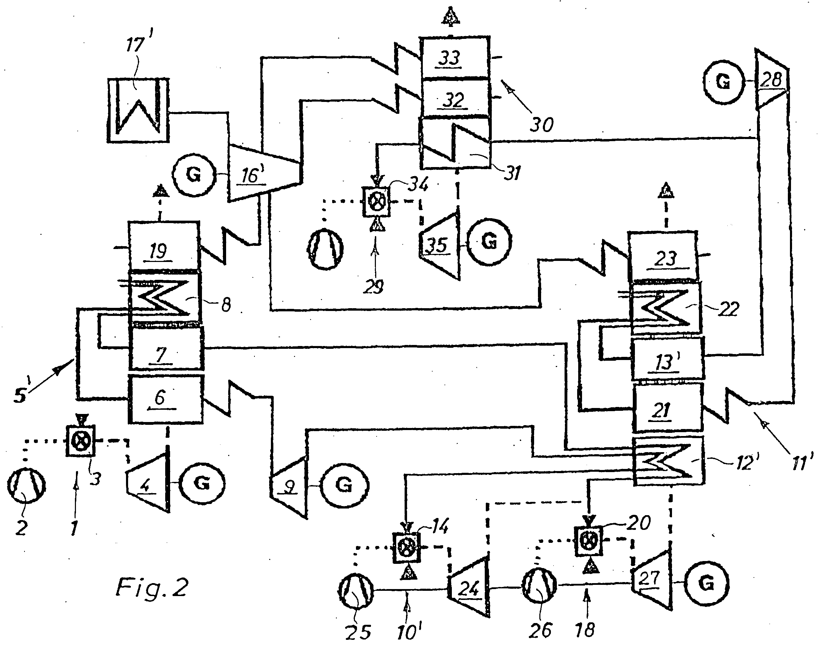

In Figur 2 ist eine erweitere Kraftwerksanlage dargestellt. In einer zweiten Stufe wird die erste Gas-Dampf-Mischturbogruppe 10' durch eine zweite Gas-Dampf-Mischturbogruppe 18 mit Zwischenerhitzung erweitert.

Die erste Prozeßstufe der erfindungsgemäßen Kraftwerksanlage beginnt mit der ersten Gasturbogruppe 1, die, wie bereits oben erwähnt, auch abweichend von der vereinfachten Darstellung in Figur 2, vorzugsweise mit Zwischenerhitzung ausgebildet sein kann.

Der ersten Gasturbogruppe 1 ist ein erster, erweiterter Abhitzekessel 5' nachgeschaltet, der neben dem Hochdruckteil 6, dem Mitteldruckteil 7, der auch hier mit einem nicht dargestellten Überhitzer ausgestattet sein kann, dem Eco-Bereich 8 zusätzlich einen Niederdruckteil 19 aufweist. Im Eco-Bereich 8 befinden sich die rauchgasbeheizten Speisewasservorwärmer des Hochdruckteils 6 und des Mitteldruckteils 7, vorzugsweise in verkämmter Anordnung. Zur möglichst vollständigen Wärmerückgewinnung ist der Niederdruckteil 19 teilweise verkämmt mit den Speisewasservorwärmern des Eco-Bereichs 8 am Ende des ersten, erweiterten Abhitzekessels 5' angeordnet. Dabei ist entsprechend der Auslegung auch eine Anordnung eines zum Niederdruckteil 19 gehörenden Überhitzers rauchgasseitig vor dem Eco-Bereich 8 möglich.

Der im Hochdruckteil 6 des ersten, erweiterten Abhitzekessels 5' erzeugte Dampf wird in der ersten Gegendruckturbine 9 auf einen Gegendruck, der etwas oberhalb des Drucks der Brennkammer 14 der ersten Gas-Dampf-Mischturbogruppe 10' liegt, entspannt. Der im Mitteldruckteil 7 erzeugte Dampf verläßt den ersten Abhitzekessel 5' mit einem etwas höheren Druck als der Druck der Brennkammer 20 einer zweiten Gas-Dampf-Mischturbogruppe 18.

Die zweite Prozeßstufe der erfindungsgemäßen Kraftwerksanlage beginnt gasseitig bei der hintereinandergeschalteten ersten Gas-Dampf-Mischturbogruppe 10' und der zweiten Gas-Dampf-Mischturbogruppe 18 mit einer Zwischenerhitzung der teilentspannten Abgase der ersten Gas-Dampf-Mischturbogruppe 10'. Das Abgas der zweiten Gas-Dampf-Mischturbogruppe 18 durchströmt einen zweiten, erweiterten Abhitzekessel 11', der einen verkämmten Überhitzer 12', einen Hochdruckteil 21, einen Mitteldruckteil 13', der auch hier mit einem nicht dargestellten Überhitzer ausgestattet sein kann, einen verkämmten Eco-Bereich 22 und einen Niederdruckteil 23 aufweist. Die Brennkammer 14 der ersten Gas-Dampf-Mischturbogruppe 10' wird mit dem Abdampf der ersten Gegendruckturbine 9 beaufschlagt, der im verkämmten Überhitzer 12' möglichst hoch überhitzt wird. Die zu einer nahe stöchiometrischen Verbrennung in der Brennkammer 14 erforderliche Luftmenge liefert ein Hochdruckverdichter 25. Die Brennkammer 20 der zweiten Gas-Dampf-Mischturbogruppe 18 wird mit dem teilentspannten Rauchgas-Dampf-Gemisch der ersten Gas-Dampf-Mischturbogruppe 10', mit dem im Mitteldruckteil 7 erzeugten und im Überhitzer 12' überhitzten Mitteldruckdampf und mit der von einem Niederdruckverdichter 26 gelieferten Verbrennungsluft beaufschlagt.

Bei entsprechender Auslegung ist es möglich, den Abdampfdruck der Gegendruckturbine 9 auf das Druckniveau des Mitteldruckteils 7 anzupassen und damit anstelle der Gas-Dampf-Mischturbogruppen 10' und 18 zu einer einzigen Maschine zusammenzufassen.

Andererseits ist auch möglich, den Niederdruckverdichter 26 und den Hochdruckverdichter 25 in einem Gehäuse unterzubringen, um den Bauaufwand zu verringern.

In einer zweiten Gas- Dampf- Mischturbine 27 der zweiten Gas-Dampf-Mischturbogruppe 18, die als Niederdruckturbine fungiert, wird das Rauchgas auf den um den rauchgasseitigen Druckverlust des nachgeschalteten zweiten, erweiterten Abhitzekessels 11' über Umgebungsdruck liegenden Enddruck entspannt.

In dem Hochdruckteil 21 des zweiten, erweiterten Abhitzekessels 11' wird Hochdruckdampf für eine zweite Gegendruckturbine 28 erzeugt. Diese entspannt den Hochdruckdampf auf das Druckniveau des Mitteldruckteils 13' des zweiten, erweiterten Abhitzekessels 11'.

Die dritte Prozeßstufe der erfindungsgemäßen Kraftwerksanlage beginnt gasseitig mit einer dritten Gas-Dampf-Mischturbogruppe 29, der ein dritter Abhitzekessel 30 nachgeordnet ist. Er weist einen Überhitzer 31, einen Mitteldruckteil 32 und einen Niederdruckteil 33 auf. Der Abdampf der zweiten Gegendruckturbine 28 und der Dampf aus dem Mitteldruckteil 13' werden im Überhitzer 31 überhitzt und zur Brennkammer 34 der dritten Gas-Dampf-Mischturbogruppe 29 geleitet. Auch dort wird der Dampf zur Brennkammerkühlung bei einer nahe stöchiometrischen Verbrennung verwendet und in einer Gas-Dampf- Mischturbine 35 der dritten Gas-Dampf-Mischturbogruppe 29 zusammen mit dem in der Brennkammer 34 gebildeten Verbrennungsabgas auf einen leicht über Umgebungsdruck liegenden Druck entspannt, um die rauchgasseitigen Druckverluste des dritten Abhitzekessels 30 ausgleichen zu können.

Als vierte Prozeßstufe dient die Kondensationsdampfturbine 16'. Diese besitzt unterschiedliche Dampfeinlässe für die unterschiedlichen Druckniveaus der einzelnen Dampfströme. Im Regelfall wird der Dampf aus dem Mitteldruckteil 32 des dritten Abhitzekessels 30 den höchsten Druck aufweisen, während der Druck der Dampfströme aus dem Niederdruckteil 19, dem Niederdruckteil 23 und dem Niederdruckteil 33 geringer ist. Der Niederdruckteil 23 kann in seiner Anordnung vergleichbar ausgeführt werden, wie beim Niederdruckteil 19 beschrieben. Nach der Entspannung des Dampfes in der Kondensationsdampfturbine 16' wird der Dampf im Kondensator 17' niedergeschlagen.

Eine vorteilhafte Weiterbildung der Erfindung, die jedoch nicht dargestellt ist, besteht darin, daß die dritte Prozeßstufe durch einen dritte Gas-Dampf-Mischturbogruppe mit Zwischenerhitzung verwirklicht wird. Hierbei muß lediglich das Druckniveau des Abdampfes der zweiten Gegendruckturbine 28 dem Druck der Hochdruckbrennkammer und der Druck des Mitteldruckteils 13' dem Druck der Niederdruckbrennkammer angepaßt werden. Auf diese Weise lassen sich, ähnlich einem Reißverschlußsystem, weitere Prozeßstufen realisieren. Den Abschluß der Kette bildet der dritte Abhitzekessel 30 und die Kondensationsdampfturbine 16' mit dem Kondensator 17'.

Wenn Bedarf an Prozeß- und/oder Fernwärme besteht, können die Niederdruckteile 19, 23 und 33 so angepaßt und/oder weggelassen werden, daß die Abgasströme der Abhitzekessel 5', 11' und 30 zur Auskoppelung dieser Nutzwärmemengen verwendet werden. Die Kondensationsturbine 16' kann dann als Gegendruckturbine und/oder der Kondensator 17' als Heinzkondensator ausgelegt werden.

Eine vorteilhafte Weiterbildung der Erfindung besteht darin, daß die Brennkammern 3, 14, 20, 34 der Gasturbinen durch Hochtemperatur - Brennstoffzellen - Module, die dann als Wärmequellen für die Gasturbinen dienen, ersetzt werden. Dadurch wird der Wirkungsgrad der Anlage gesteigert.

## Patentansprüche

1. Kraftwerksanlage, mit Gas- und Dampfprozessen, insbesondere Gas-Dampf-Mischturboprozessen, mit einer ersten Gasturbogruppe (1) und einem dieser nachgeordneten ersten Abhitzekessel (5), dessen Hochdruckteil (6) in Strömungsverbindung mit einer ersten Gegendruckturbine (9) steht, deren Abdampf vorzugsweise in die Brennkammer (14) einer ersten Gas-Dampf-Mischturbogruppe (10) einführbar ist, wobei der Abdampf der ersten Gegendruckturbine in einem Überhitzer (12) eines der ersten Gas-Dampf-Mischturbogruppe (10) nachgeordneten zweiten Abhitzekessels (11) zwischenüberhitzt ist und wobei der erste Abhitzekessel (5) einen Mitteldruckteil (7) aufweist, der in Strömungsverbindung mit einer Kondensationsdampfturbine (16) steht.

2. Kraftwerksanlage nach Anspruch 1,
***dadurch gekennzeichnet, daß*** der zweite Abhitzekessel (11) einen Mitteldruckteil (13) aufweist, der in Strömungsverbindung mit der Kondensationsdampfturbine (16) steht.

3. Kraftwerksanlage nach Anspruch 1 oder 2,
***dadurch gekennzeichnet, daß*** dem Hochdruckteil (6) und dem Mitteldruckteil (7) des ersten Abhitzekessels (5) je ein Economizer (Speisewasservorwärmer) vorgeschaltet ist, die in einem Eco-Bereich (8) angeordnet sind, der in Abgasströmungsrichtung gesehen dem Hochdruckteil (6) und dem Mitteldruckteil (7) nachgeordnet ist.

4. Kraftwerksanlage nach Anspruch 3,
***dadurch gekennzeichnet, daß*** die Economizer verkämmt angeordnet sind.

5. Kraftwerksanlage nach einem der vorangegangenen Ansprüche,
***dadurch gekennzeichnet, daß*** der Mitteldruckteil (7) des ersten Abhitzekessels (5) und der Mitteldruckteil (13) des zweiten Abhitzekessels (11) unterschiedliche Drücke und entsprechend unterschiedliche Eintrittsstellen in der Kondensationsdampfturbine (16) aufweisen.

6. Kraftwerksanlage nach einem der vorangegangenen Ansprüche,
***dadurch gekennzeichnet, daß*** die erste Gasturbogruppe (1) zweistufig mit Zwischenerhitzung ausgebidet ist.

7. Kraftwerksanlage nach einem der vorangegangenen Ansprüche,
***dadurch gekennzeichnet, daß*** der ersten Gas-Dampf-Mischturbogruppe (10') eine zweite Gas-Dampf-Mischturbogruppe (18) nachgeschaltet ist, deren Abgasauslaß in Strömungsverbindung mit einem zweiten, erweiterten Abhitzekessel (11') steht.

8. Kraftwerksanlage nach Anspruch 7,
***dadurch gekennzeichnet, daß*** die Brennkammer (20) der zweiten Gas-Dampf-Mischturbogruppe (18) in Strömungsverbindung mit einem Abgasauslaß der ersten Gas-Dampf-Mischturbogruppe (10') und mit dem Mitteldruckdampfteil (7) eines ersten erweiterten Abhitzekessel (5') steht, wobei der Dampf des Mitteldruckteils (7) durch einen Überhitzer (12) strömt, der im zweiten erweiterten Abhitzekessel (11') angeordnet ist.

9. Kraftwerksanlage nach einem der vorangegangenen Ansprüche,
***dadurch gekennzeichnet, daß*** im zweiten erweiterten Abhitzekessel (11') ein Hochdruckteil (21) angeordnet ist, der in Strömungsverbindung mit einer zweiten Gegendruckturbine (28) steht.

10. Kraftwerksanlage nach einem der vorangegangenen Ansprüche,
***dadurch gekennzeichnet, daß*** eine dritte Gas-Dampf-Mischturbogruppe (29) mit einem nachgeschalteten dritten Abhitzekessel (30) vorgesehen ist, deren Brennkammer (34) vom Abdampf der zweiten Gegendruckturbine (28) und von dem Dampf eines Mitteldruckteils (13') des zweiten, erweiterten Abhitzekessels (11') nach Überhitzung in einem Überhitzer (31) des dritten Abhitzekessels (30) beaufschlagt ist.

11. Kraftwerksanlage nach einem der vorangegangenen Ansprüche,
***dadurch gekennzeichnet, daß*** eine mehrstufige Kondensationsdampfturbine (16') von einem Hochdruckteil (32) und einem Niederdruckteil (33) des dritten Abhitzekessels (30) sowie vom Niederdruckteil (19) des ersten, erweiterten Abhitzekessels (5') und vom Niederdruckteil (23) des zweiten, erweiterten Abhitzekessels (11') an den dem jeweiligen Dampfdruckniveau entsprechenden Stellen beaufschlagt ist.

12. Kraftwerksanlage nach einem der vorangegangenen Ansprüche,
***dadurch gekennzeichnet, daß*** ein Niederdruckverdichter (26) der zweiten Gas-Dampf-Mischturbogruppe (18) als erste Stufe eines Hochdruckverdichters (25) der ersten Gas-Dampf-Mischturbogruppe (10') angeordnet ist.

13. Kraftwerksanlage nach einem der vorangegangenen Ansprüche,
***dadurch gekennzeichnet, daß*** eine dritte, erweiterte Gas-Dampf-Mischturbogruppe zweistufig mit Zwischenerhitzung ausgelegt ist, wobei der Abdampf der zweiten Gegendruckturbine (28) in die Brennkammer des Hochdruckteils und der Dampf des Mitteldruckteils (13') des zweiten erweiterten Abhitzekessels (11') in die Brennkammer des Niederdruckteils der dritten, erweiterten Gas-Dampf-Mischturboguppe eingeführt werden.

14. Kraftwerksanlage nach einem der vorangegangenen Ansprüche,
***dadurch gekennzeichnet, daß*** weitere Prozeßstufen in Art eines Reißverschlußsystems angeordnet sind, wobei den Abschluß der Kette die Gas-Dampf-Mischturbogruppe (29) mit nachgeschaltetem Abhitzesystem und der Kondensationsdampfturbine (16') bildet.

15. Kraftwerksanlage nach einem der vorangegengangen Ansprüche mit Prozeß- und/oder Fernwärmenutzung,
***dadurch gekennzeichnet, daß*** die Niederdruckteile (19, 23 und 33) so angepaßt und/oder entfernt sind, daß die Abgasströme der Abhitzekessel (5', 11' und 30) zur Auskopplung dieser Nutzwärmemengen verwendet werden, wobei die Kondensationsturbine (16') dann als Gegendruckturbine und/oder der Kondensator (17') als Heizkondensator ausgelegt sind.

16. Kraftwerksanlage nach einem der vorangegangenen Ansprüche,
***dadurch gekennzeichnet, daß*** die Brennkammern (3, 14, 20 und 34) der Gasturbinen durch Hochtemperatur - Brennstoffzellen - Module, die dann als Wärmequellen für die Gasturbinen dienen, ersetzt werden.
